# EUROPEAN PATENT SPECIFICATION

(11) **EP 3 227 376 B1**
(45) Date of publication and mention of the grant of the patent: **13.03.2019**
(21) Application number: 15801081.9
(22) Date of filing: 16.11.2015
(51) Int. Cl.: C09D 179/08, C08G 73/10, C08K 5/523

(54) **HIGH MELT FLOW POLYETHERIMIDE-SILOXANE COMPOSITIONS, METHOD OF MANUFACTURE, AND ARTICLES MADE THEREFROM**
POLYETHERIMID-SILOXAN-ZUSAMMENSETZUNGEN MIT HOHEM SCHMELZFLUSS, VERFAHREN ZUR HERSTELLUNG UND DARAUS HERGESTELLTE ARTIKEL
COMPOSITIONS DE POLYÉTHERIMIDE-SILOXANE À INDICE DE FLUIDITÉ À L'ÉTAT FONDU ÉLEVÉ, LEUR PROCÉDÉ DE PRODUCTION, ET ARTICLES FABRIQUÉS À PARTIR DE CELLES-CI

(30) Priority: 02.12.2014 US 201414558118
(43) Date of publication of application: 11.10.2017
(73) Proprietor: SABIC Global Technologies B.V., 4612 PX Bergen op Zoom (NL)
(72) Inventor: GALLUCCI, Robert Russell, Mt. Vernon, Indiana 47620-9367 (US); APPEL, Pamela J., Mt. Vernon, Indiana 47620-9367 (US)
(74) Representative: Office Freylinger
(86) International application number: PCT/US2015/060877
(87) International publication number: WO 2016/089583

(56) References cited:
- EP-A1- 0 955 339
- WO-A1-93/04109
- US-A1- 2014 326 163
- US-A1- 2014 329 940
- US-B1- 8 017 699

## Description

### BACKGROUND

Thermoplastic polymers, such as polyetherimide-siloxanes, polyetherimides, polycarbonates and blends thereof, are utilized for electrical parts, wire coatings, building materials, automobile parts, electronic devices, and airplane parts. It is most desirable and often required that such materials be flame resistant or have low flammability and be thermally stable. The use of phosphates as flame retardants for thermoplastic polymers is generally known, particularly the use of monophosphates, for example, triphenyl phosphate, tricresyl phosphate, diphenylcresyl phosphate, and the like. Such monophosphate esters tend to suffer from several drawbacks including migration to the surface during molding of the thermoplastic composition (often referred to as "juicing"). Furthermore, to achieve an acceptable level of flame retardancy, additional flame retardants are often employed in combination with the monophosphates, particularly halogen-containing flame retardants. Halogen-containing flame retardants are undesirable because of environmental concerns and pitting of the mold surface. If high concentrations of the above-mentioned phosphate esters are employed, a decrease in heat resistance and impact strength can result.

In addition to the flame retardant properties required for use in specific applications, polyetherimide-siloxanes meeting certain processing requirements are also of interest. For example, an increased melt flow rate of polyetherimide-siloxane compositions would be desirable in some applications. In some applications, the polyetherimide-siloxane compositions can benefit from increased elongation before permanent deformation (i.e., increased elongation at yield).

Accordingly, there remains a continuing need for improved thermoplastic compositions comprising a polyetherimide-siloxane copolymer having the desired combination of improved melt flow rate and mechanical properties including improved elongation, higher strength, and higher impact, while maintaining low flammability.

### BRIEF DESCRIPTION

A polyetherimide-siloxane composition is disclosed, the composition comprising 70 to 99.9 weight percent of a polyetherimide-siloxane copolymer having a weight average molecular weight of 5,000 to 80,000 Daltons and having a polysiloxane content of 10 to 50 weight percent, preferably 15 to 40 weight percent, more preferably 20 to 35 weight percent; and 0.1 to 30 weight percent of an aryl phosphate having a molecular weight from 500 to 1,200 Daltons; wherein weight percent is based on the total weight of the composition; and wherein thermoplastic polymers other than the polyetherimide-siloxane copolymer are excluded from the polyetherimide-siloxane composition.

Also disclosed is a method of preparing the polyetherimide-siloxane composition, the method comprising melt-combining the components of the composition, and extruding the components.

Also disclosed is an article comprising the polyetherimide-siloxane composition.

The above described and other features are exemplified by the following detailed description.

### DETAILED DESCRIPTION

Described herein are polyetherimide-siloxane compositions comprising a polyetherimide-siloxane copolymer and an aryl phosphate having a molecular weight from 500 to 1200 Daltons (Da). The inventors hereof have discovered that the use of an aryl phosphate having a molecular weight from 500 to 1200 Da in a polyetherimide-siloxane composition provides compositions that have excellent melt flow properties, as well as improved physical properties including improved elongation and flexibility, and low flammability. The polyetherimide-siloxane compositions are particularly useful for applications requiring transparent articles, as the disclosed polyetherimide-siloxane compositions further maintain good clarity.

The polyetherimide-siloxane composition comprises a polyetherimide, specifically, a polyetherimide-siloxane copolymer. The polyetherimide-siloxane copolymers comprise more than 1, for example 10 to 1000, or 10 to 500, polyetherimide structural units of the formula 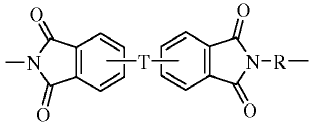 wherein each R is the same or different, and is a substituted or unsubstituted divalent organic group, such as a C₆₋₂₀ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular a divalent group of the formula 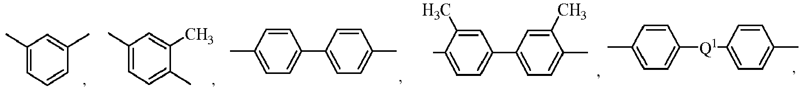 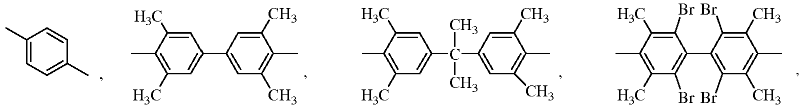 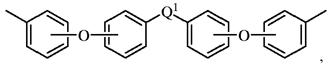 wherein Q¹ is -O-, -S-, -C(O)-, -SO₂-, -SO-, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In an embodiment R is m-phenylene or p-phenylene.

Further in the above formula, T is -O- or a group of the formula -O-Z-O- wherein the divalent bonds of the -O- or the -O-Z-O- group are in the 3,3', 3,4', 4,3', or the 4,4' positions. The group Z in -O-Z-O- of formula (1) is also a substituted or unsubstituted divalent organic group, and can be an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded. Exemplary Z groups include groups derived from a dihydroxy compound of the formula 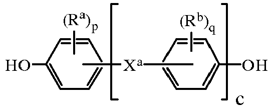 wherein R^{a} and R^{b} can be the same or different and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -SO₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorus. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of the formula 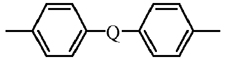 wherein Q is -O-, -S-, -C(O)-, -SO₂-, -SO-, or -C_{y}H_{2y}- wherein y is an integer from 1 to 5 or a halogenated derivative thereof (including a perfluoroalkylene group). In a specific embodiment Z is a derived from bisphenol A, such that Q in the above formula is 2,2-isopropylidene.

The polyetherimide optionally comprises up to 10 mole percent (mol%), up to 5 mol%, or up to 2 mol% of units of the above formula wherein T is a linker of the formula 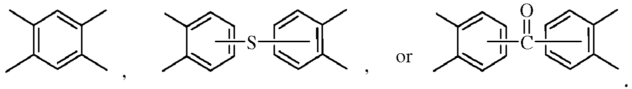 In some embodiments no units are present wherein R is of these formulas.

In some embodiments, the polyetherimide can comprise a polyetherimide sulfone. In some embodiments, the polyetherimides have no R groups containing sulfone groups, or no sulfone groups are present in the polyetherimide.

In an embodiment, R is m-phenylene or p-phenylene and T is -O-Z-O- wherein Z is a divalent group derived from the above described dihydroxy compound. Alternatively, R is m-phenylene or p-phenylene and T is -O-Z-O- wherein Z is a divalent group derived from the above described dihydroxy compound and Q is 2,2-isopropylidene.

The polyetherimide can be prepared by any of the methods well known to those skilled in the art, including the reaction of an aromatic bis(ether anhydride) of the formula 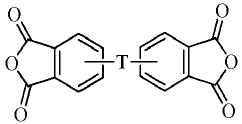 with an organic diamine of the formula

H₂N-R-NH₂

wherein T and R are defined as described above. Copolymers of the polyetherimides can be manufactured using a combination of an aromatic bis(ether anhydride) of the above formula and a different bis(anhydride), for example a bis(anhydride) wherein T does not contain an ether functionality, for example T is a sulfone.

Illustrative examples of bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations thereof.

Examples of organic diamines include ethylenediamine, propylenediamine, trimethylenediamine, diethylenetriamine, triethylene tetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone, and bis(4-aminophenyl) ether. Combinations of these compounds can also be used. In some embodiments the organic diamine is m-phenylenediamine, p-phenylenediamine, sulfonyl dianiline, or a combination comprising one or more of the foregoing.

The polyetherimide-siloxane copolymer further comprises one or more siloxane blocks of the formula 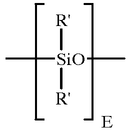 wherein each R' is independently a C₁₋₁₃ monovalent hydrocarbyl group and E can be 2 to 50, or 5 to 30, or 10 to 40. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination comprising at least one of the foregoing. In an embodiment no halogens are present. Combinations of the foregoing R' groups can be used in the same copolymer. In an embodiment, the polysiloxane units comprise R' groups having minimal hydrocarbon content. In a specific embodiment, an R' group with a minimal hydrocarbon content is a methyl group.

The polyetherimide-siloxane copolymer can be a block or graft copolymer. Block polyetherimide-siloxane copolymers comprise etherimide units and siloxane blocks in the polymer backbone. The etherimide units and the siloxane blocks can be present in random order, as blocks (i.e., AABB), alternating (i.e., ABAB), or a combination thereof. Graft polyetherimide-siloxane copolymers are non-linear copolymers comprising the siloxane blocks connected to linear or branched polymer backbone comprising etherimide blocks.

The polyetherimide-siloxane copolymer can be formed by polymerization of an aromatic bisanhydride and a diamine component comprising an organic diamine as described above or mixture of diamines, and a polysiloxane diamine of the formula 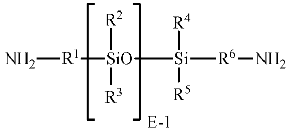 wherein R²-R⁴ are each independently a C₁₋₁₃ monovalent hydrocarbyl group and E is as described above. R¹ and R⁶ is each independently a C₂-C₂₀ hydrocarbon, in particular a C₂-C₂₀ arylene, alkylene, or arylenealkylene group. In an embodiment R¹ and R⁶ are each a C₂-C₂₀ alkyl group, specifically a C₂-C₂₀ alkyl group such as propylene, and E has an average value of 5 to 100, 5 to 75, 5 to 60, 5 to 15, or 15 to 40. Procedures for making the polysiloxane diamines of the above formula are well known in the art.

In some polyetherimide-siloxane copolymers, the diamine component can contain 10 to 90 mol%, or 20 to 50 mol%, or 25 to 40 mol% of the polysiloxane diamine and 10 to 90 mol%, or 50 to 80 mol%, or 60 to 75 mol% of organic diamine described above. The diamine components can be physically mixed prior to reaction with the bisanhydride(s), thus forming a substantially random copolymer. Alternatively, block or alternating copolymers can be formed by selective reaction of each diamine with aromatic bisanhydride(s), to make polyimide blocks that are subsequently reacted together. Thus, the polyetherimide-siloxane copolymer can be a block, random, or graft copolymer.

In an embodiment, the polyetherimide-siloxane copolymer has units of the formula 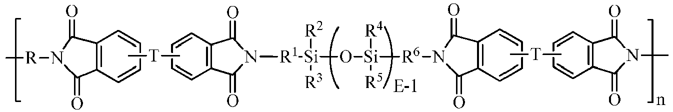 wherein R is a divalent C₂₋₂₀ hydrocarbon group, R¹ and R⁶ is each independently a C₂₋₂₀ divalent hydrocarbyl group, R²-R⁵ is each independently a C₁₋₁₃ monovalent hydrocarbyl group, E is 2 to 50, preferably 5 to 30, more preferably 10 to 40, T is -O- or a group of the formula -O-Z-O-wherein the divalent bonds of the -O- or the -O-Z-O- group are in the 3,3', 3,4', 4,3', or the 4,4' positions, Z is an aromatic C₆₋₂₄ monocyclic or polycyclic group optionally substituted with 1 to 6 C₁₋₈ alkyl groups, 1-8 halogen atoms, or a combination comprising at least one of the foregoing, and n is an integer from 5 to 100. In a specific embodiment, the R of the etherimide is a phenylene, Z is derived from bisphenol A, R¹ and R⁶ are propylene, E is 2 to 50, preferably 5 to 30, more preferably 10 to 40, n is 5 to 100, and each of R²-R⁵ of the siloxane is methyl.

The relative amount of polysiloxane units and etherimide units in the polyetherimide-siloxane copolymer depends on the desired properties, and are selected using the guidelines provided herein. In particular, as mentioned above, the block or graft polyetherimide-siloxane copolymer is selected to have a certain average value of E, and is selected and used in amount effective to provide the desired weight percent of polysiloxane units in the composition. In an embodiment the polyetherimide-siloxane copolymer comprises 10 to 50 weight percent, or 10 to 40 weight percent, or 20 to 35 weight percent polysiloxane units, based on the total weight of the polyetherimide-siloxane copolymer.

The polyetherimide-siloxane copolymer has a weight average molecular weight (M_{w}) of 5,000 to 80,000 Daltons as measured by gel permeation chromatography using polystyrene standards, and has a polysiloxane content of 10 to 50 weight percent, preferably 15 to 40 weight percent, more preferably 20 to 35 weight percent. In some embodiments, the polyetherimide-siloxane copolymer has an M_{w} 55,000 to 75,000 Da, specifically, 60,000 to 70,000 Da.

In some embodiments, the polyetherimide can have end groups comprising carboxylic anhydrides, aryl amines, or a combination thereof. For example, the polyetherimide can have both carboxylic anhydride and aryl amine end groups. In some embodiments, improved melt stability can be obtained by a polyetherimide having a greater number of carboxylic anhydride end groups than aryl amine end groups. For example, improved melt stability can be obtained by a polyetherimide-siloxane copolymer having a greater number of carboxylic anhydride end groups than aryl amine end groups.

The polyetherimide-siloxane can have less than 1000 parts per million (ppm) of a halogen, for example, chlorine and bromine atoms. The polyetherimide-siloxane can further have less than 100 ppm of transition metal content, specifically, less than 100 ppm of mercury, lead, cadmium, arsenic, thallium, and combinations thereof.

The polyetherimide-siloxane is present in an amount of 70 to 99.9 weight percent (wt%), for example, 75 to 99.9 wt%, for example, 80 to 99.9 wt%, for example 85 to 99.9 wt%, wherein weight percent is based on the total weight of the composition.

The polyetherimide-siloxane composition comprises an aryl phosphate having a molecular weight from 500 to 1200 Da. In some embodiments, aryl phosphates having a molecular weight greater than 1200 Da are excluded from the polyetherimide composition. "Aryl phosphates" as used herein are phosphates containing aryl esters and no benzylic protons. The aryl phosphate can have a boiling point at atmospheric pressure of greater than or equal to 300°C. The aryl phosphates can be represented by the formula 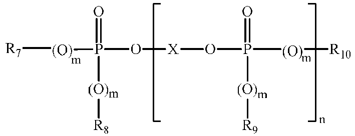 wherein R₇, R₈, R₉, and R₁₀ are independently a C₆₋₂₀ aryl or a C₆₋₂₈ alkaryl group, X is an arylene group, and m is 0 or 1. When the aryl phosphate is an aryl phosphate having a molecular weight from 500 to 1200 Da, n can be 1 to 5. For example, n can be 1. In some embodiments, the polyetherimide composition can exclude aryl phosphates having a molecular weight greater than 2000 Da, specifically, greater than 1500 Da, or no aryl phosphates having a molecular weight of greater than 2000 Da, specifically, greater than 1500 Da are present in the polyetherimide composition.

In the above formula, the aryl groups can be aryl or C₁₋₈ alkyl-substituted aryl groups (alkaryl groups). For example, the aryl groups can be cresyl, phenyl, xylenyl, propylphenyl, and butylphenyl. The arylene group X can be derived from a dihydric compound, for example, resorcinol, hydroquinone, and bisphenol A. For example, the aryl phosphate can comprise bisphenol A diphosphates, resorcinol diphosphates, biphenol diphosphates, hydroquinone diphosphates, acetophenone bisphenol diphosphates, dihydroxy diphenyl ether diphosphates, or a combination comprising at least one of the foregoing. In one embodiment, the aryl groups R₇, R₈, R₉, and R₁₀ can be phenyl and the arylene group X can be bisphenol A. For example, the aryl phosphate can be bisphenol A bis(diphenyl phosphate) (BPADP), wherein n is 1, m is 1, X is bisphenol A and R₇, R₈, R₉, and R₁₀ are phenyl, and having a molecular weight of 693 Da.

In some embodiments, aryl phosphates having only one aryl oxygen linkage for each aryl ring in the phosphate structure can be preferred over an aryl phosphate having two or more oxygen linkages per aryl ring. Examples of aryl phosphates having one aryl oxygen linkage per aryl ring can include bisphenol A bis(diphenyl phosphate), bisphenol A bis(dicresyl phosphate), bisphenol A bis(dixylyl phosphate), biphenyl bis(diphenyl phosphate), biphenyl bis(dicresyl phosphate) and combinations comprising at least one of the foregoing. Examples of aryl phosphates having two or more oxygen linkages per aryl ring can include resorcinol diphosphates, including resorcinol bis(diphenyl)phosphate and resorcinol bis(dicresyl)phosphate, hydroquinone bis(diphenyl)phosphate, phloroglucinol, tris(triphenyl phosphate) and combinations comprising at least one of the foregoing. Thus, in some embodiments, the polyetherimide-siloxane composition comprises an aryl phosphate wherein the aryl phosphate has only one oxygen atom linkage for each aryl ring in the phosphate structure.

Aryl phosphates that are particularly useful in the compositions of the present disclosure generally have a good affinity for the polyetherimide matrix, and do not juice, bloom, or migrate from the compositions. For example, the aryl phosphates do not juice, bloom, or migrate from the compositions during drying, molding, or melt processing steps or during aging in end use applications.

The aryl phosphate can be present in an amount of 0.1 to 30 wt%, for example, 0.1 to 25 wt%, for example, 0.1 to 20 wt%, for example 0.1 to 15 wt%, wherein weight percent is based on the total weight of the composition.

The polyetherimide-siloxane composition can optionally further comprise an anti-drip agent. The anti-drip agent can be encapsulated by a rigid copolymer. Anti-drip agents, when present, can be included in an amount of 0.1 to 5, or 0.1 to 3 wt%, based on the weight of the total composition. Excessive die swell can make it difficult to produce uniform extrudates (e.g., strands) which can be cooled and pelletized.

In addition to the above-described components, the polyetherimide-siloxane composition can optionally include various additives ordinarily incorporated into thermoplastic compositions, with the proviso that the additives are selected so as to not significantly adversely affect the desired properties of the polyetherimide-siloxane composition, for example the melt flow, elongation, strength, impact, and flame retardant properties. Such additives can be mixed at a suitable time during the mixing of the components for forming the composition. Additives can include impact modifiers, reinforcing agents, fillers, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, radiation stabilizers, and flame retardants. A combination of additives can be used, for example a combination of a heat stabilizer, mold release agent, and ultraviolet light stabilizer. The additives are used in the amounts generally known to be effective. For example, the total amount of the additives (other than any impact modifier, filler, or reinforcing agents) can be 0.01 to 5 weight percent based on the total weight of the polyetherimide composition.

Possible fillers or reinforcing agents include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated with a layer of metallic material to facilitate conductivity, or surface treated with silanes to improve adhesion and dispersion with the polymer matrix. Fillers can be used in amounts of 1 to 200 parts by weight, based on 100 parts by weight of based on 100 parts by weight of the total composition.

The polyetherimide-siloxane composition can optionally further include other polymers, in an amount of up to 30 wt%, preferably up to 20 wt%, wherein thermoplastic polymers other than the polyetherimide-siloxane are excluded from the polyetherimide-siloxane composition.

In some embodiments, the polyetherimide-siloxane composition can be essentially free of halogens, for example, one or more of fluorine, chlorine, and bromine. "Essentially free of one or more of fluorine, chlorine and bromine" is defined as having a fluorine and/or bromine and/or chlorine content of less than or equal to 100 parts per million by weight (ppm), less than or equal to 75 ppm, or less than or equal to 50 ppm, based on the total parts by weight of the composition. Alternatively, or in addition, the polyetherimide-siloxane composition is essentially free of sodium ions, i.e., having a sodium content of 1000 ppm or less, preferably 500 ppm or less. In some instances, the polyetherimide-siloxane composition can have 100 ppm or less of elements selected from the group consisting of mercury, lead, cadmium, arsenic, and thallium.

The polyetherimide-siloxane compositions can be manufactured by various methods according to general techniques which are known. The polyetherimide-siloxane compositions described herein can generally be made by melt-blending the components using any known methods. For example, a polyetherimide-siloxane and an aryl phosphate, and other optional components can be first blended in a HENSCHEL-Mixer high speed mixer. Other low shear processes, including but not limited to hand-mixing, can also accomplish this blending. The blend can then be fed into a twin-screw extruder via a hopper. Alternatively, at least one of the components can be incorporated into the composition by feeding directly into the extruder at the throat and/or downstream through a side-stuffer. Additives can also be compounded into a masterbatch containing the desired polyetherimide-siloxane and fed into the extruder. Generally, the polyetherimide-siloxane compositions can be melt-processed at temperatures of 250 to 350°C, for example, 270 to 310°C. The extrudate can be quenched in a water bath and pelletized. The pellets so prepared can be one-fourth inch long or less as desired. Such pellets can be used for subsequent molding, shaping, or forming.

The compositions of the present disclosure can be formed into articles using any suitable techniques, for example, melt-processing techniques. Commonly used melt-molding methods can include injection molding, extrusion molding, blow molding, rotational molding, coining, and injection blow molding. For example, the melt molding method can be injection molding. The compositions of the present disclosure can be formed into sheets and both cast and blown films by extrusion. These films and sheets can be further thermoformed into articles and structures that can be oriented from the melt or at a later stage in the processing of the composition. The compositions can be over-molded onto an article made from a different material and/or by a different process. The articles can also be formed using techniques such as compression molding or ram extruding. The articles can be further formed into other shapes by machining. Exemplary articles include electrical meters, electrical motors, reflectors, profile extrusion, sheets and films, sight glasses, tubing, dial faces, electrical connectors, circuit boards or circuit board components, and components of hand-held electronic devices. Hand-held electronic devices can include phones, tablets, computers, and components thereof. In a specific embodiment, the article is a coated wire, part of an electrical motor or generator, a flexible plug cover or connector, or a handle for improved grip. In another specific embodiment, the article is a thin article, for example a housing for an electronic device, or an over-molded outer layer, for example of an electric circuit. When the article is an over-molded outer layer, a rubbery, flexible outer layer that resists moisture and/or protects from mechanical damage or vibration can be provided. The article can have a maximum thickness of 3 centimeters (cm), 2.5 cm, 2 cm, 1 cm, 0.5 cm, or 0.3 cm. At least some portion of the article can have a thickness of 0.1 to 5.0 millimeters (mm), for example, at least some portion of the article can have a thickness of 0.1 to 2.0 mm. The article can have a length that is at least 10 times the thickness, for example, the length of the article can be at least 100 times the thickness. In some embodiments, the longest aspect of the article can be at least 5 cm.

The polyetherimide-siloxane compositions have no limitation of the utilization field thereof for molded articles. The polyetherimide-siloxane compositions can be advantageously used in applications where a combination of improved melt flow and enhanced physical properties including impact strength and thermal stability and flame retardancy are required. The polyetherimide-siloxane compositions can further be advantageously used in applications where transparent articles are required.

The articles prepared from the compositions of the present disclosure can be used in applications including consumer goods, office equipment, computers, electronic or communication devices, automotive parts, domestic or industrial machine tools, lawn equipment, and domestic appliances. The term "automotive" refers to applications with respect to any vehicle of transportation, for example cars, trucks, motorcycles, scooters, motor bicycles, boats, and sport vehicles. The articles can include a wide array of devices, or components of a device, for a variety of industries and applications, for example, electrical, communication, transportation, medical, information management, material handling, manufacturing, food service, storage, industrial applications, and personal care products. The articles can have snap fit connectors to facilitate attachment to more complex devices. The articles can also have holes or apertures.

The polyetherimide-siloxane composition can have a melt flow at least 10% greater than the melt flow of the same polyetherimide-siloxane composition without the aryl phosphate, measured according to ASTM D1238 at 300°C under a 5.0 kilogram load.

A molded sample of the polyetherimide-siloxane composition can have a notched Izod impact strength at least 5%, preferably at least 10%, more preferably at least 20% greater than the notched Izod impact strength of a molded sample of the same polyetherimide-siloxane composition without the aryl phosphate, measured according to ASTM D256 at 23°C.

A molded sample of the polyetherimide-siloxane composition can have a tensile elongation at break that is at least 10%, preferably at least 20% greater than the tensile elongation at break of a molded sample of the same polyetherimide-siloxane composition without the aryl phosphate, measured according to ASTM D638.

In addition, a molded sample of the polyetherimide-siloxane composition can have a tensile elongation at yield that is at least 10%, preferably at least 20%, more preferably at least 40%, even more preferably at least 50% greater than the tensile elongation at yield of a molded sample of the same polyetherimide-siloxane composition without the aryl phosphate, measured according to ASTM D638.

The polyetherimide-siloxane composition can have a tensile elongation at break that is at least 1.5 times the tensile elongation at yield, each measured according to ASTM D638.

The polyetherimide-siloxane composition can have a weight loss of less than or equal to 2% of the initial weight of the composition when heated to 400°C at a rate of 20°C per minute under nitrogen, measured according to ASTM E1131.

The polyetherimide-siloxane composition can have a glass transition temperature of greater than or equal to 120°C.

The polyetherimide-siloxane composition can have a melt volume viscosity rate of greater than or equal to 10 cubic centimeters per 10 minutes (cc/10 minutes) at 300°C using a 6 minute equilibration time and a 6.7 kilogram (kg) load. The polyetherimide-siloxane composition can further have a melt viscosity rate using an 18 minute equilibration time of less than 30%, preferably less than 20% higher than the 6 minutes melt viscosity rate measured under the same conditions.

The polyetherimide-siloxane compositions disclosed herein comprise a polyetherimide-siloxane copolymer and an aryl phosphate, which yields compositions having improved melt flow, impact strength, thermal stability, and flame retardancy. The compositions further retain good clarity. The polyetherimide compositions provide a thermoplastic with good melt processability, high temperature resistance, for example having a Vicat temperature above 120°C, and good flexibility, for example having a modulus of 35 MPa or less and an elongation at yield of more than 50%. The combination of flame retardancy, especially in the absence of chlorine and bromine (less than 100 ppm) with the above-mentioned properties can provide useful compositions for articles for a variety of applications. Therefore, a substantial improvement in polyetherimide-siloxane compositions comprising polyetherimide-siloxane copolymers is provided.

The compositions, methods, and articles are further illustrated by the following examples.

### EXAMPLES

The materials shown in Table 1 were used in the examples.

**Table 1.**

| Material | Description | Vendor |
|---|---|---|
| STM1500 | Polyetherimide-siloxane copolymer comprising structural units derived from bisphenol A dianhydride, m-phenylene diamine, and 34 weight percent bis(3-aminopropyl)polydimethylsiloxane, and having a weight average molecular weight (M_{w}) of 67,000 Daltons (Da); CAS Reg. No. 99904-16-2; obtained as SILTEM 1500. | SABIC |
| STM1600 | Polyetherimide-siloxane copolymer comprising structural units derived from bisphenol A dianhydride, m-phenylene diamine, and 20 weight percent bis(3-aminopropyl)polydimethylsiloxane, and having a weight average molecular weight (M_{w}) of 65,000 Daltons (Da); CAS Reg. No. 99904-16-2; obtained as SILTEM 1600. | SABIC |
| BPADP | Bisphenol A bis(diphenyl phosphate), CAS Reg. No. 5945-33-5 | ICL-IP America Inc. |
| TSAN | Styrene acrylonitrile (SAN)-encapsulated fibrillar polytetrafluoroethylene (PTFE) having a ratio of SAN:PTFE of 1:1. | SABIC |

Polyetherimide-siloxane compositions were prepared by extruding a polyetherimide-siloxane copolymer (SILTEM) with an aryl phosphate, specifically, bisphenol A bis(diphenyl phosphate) (BPADP). The polyetherimide-siloxane copolymers had anhydride end groups in excess of any aryl amine end groups, and had less than 100 ppm of any transition metal, less than 1000 ppm of chlorine or bromine, and less than 100 ppm of any alkaline or alkaline earth metal, for example, cations of sodium, potassium, calcium or magnesium.

Compositions were prepared using a 30 millimeter (mm) diameter co-rotating twin screw extruder with six barrel sections. The molten BPADP aryl phosphate was injected downstream from the vent (into the 4^{th} barrel section) during extrusion of the polyetherimide-siloxane compositions.

The twin screw extruder employed a screw speed of 250 revolutions per minute (rpm) and a barrel temperature of 270 to 310°C. The extruder was vented to the atmosphere, and no external vacuum was applied. The extrudates were cooled in a water bath prior to pelletizing. Pellets were dried at 110°C for 4 hours prior to use for injection molding.

Test specimens were injection molded in accordance with ASTM test methods using an injection molding machine operating at a melt temperature of 270 to 310°C and a mold temperature of 90°C and having a 30 second cycle time. All molded samples were conditioned for at least 48 hours at 50 percent relative humidity prior to testing.

Physical properties were measured according to ASTM test methods, using the following tests and test methods, as described below. Unless indicated otherwise, all tests are the tests in effect in the year 2015.

Melt volume-flow rate (MVR) was run on dried pellets in accordance with ASTM D1238 at 300°C under a 5.0 kilogram load. MVR was measured as cubic centimeters per 10 minutes (cc/10 minutes) at 6 and 18 minute equilibration times at 300°C. Higher values indicate higher melt flow.

Viscosity vs. shear rate (MVM) was determined using a capillary rheometer at 280°C according to ASTM D3835 using a shear rate of about 30 to 7000 seconds⁻¹. Lower values indicate higher melt flow.

Molecular weight was measured using gel permeation chromatography (GPC) according to ASTM D5296. Correction was made to exclude the lower molecular weight phosphate portion of the GPC curves. Polystyrene standards were used for calibration.

The glass transition temperature (Tg) was determined using dynamic mechanical analysis (DMA) in flex mode on a 3.2 millimeter injection molded bar with a heating rate of 3°C/min according to ASTM D638.

Tensile properties were measured on 7.5 x 1/8 inch injection molded parts according to ASTM D638, and are reported in units of megapascals (MPa). Tensile modulus was measured as tangent, and tensile strength and elongation are reported at yield and break. Crosshead speed was 50 millimeters per minute.

Flexural modulus and strength were measured on 7.5 x 1/8 inch injection molded parts according to ASTM D790 using a crosshead speed of 50 millimeters per minute.

Notched Izod (NI) impact strength was measured according to ASTM D256 using a 5 pound hammer on 2.5 x ½ x 1/8 inch injection molded bars.

Thermal gravimetric analysis (TGA) was conducted under nitrogen and at a heating rate of 20°C per minute according to ASTM E1131.

Compositions and properties are summarized in the Tables below, where component amounts are expressed in weight percent based on the total weight of the composition.

As illustrated by Examples 1 to 5, shown in Table 2, a polyetherimide-siloxane copolymer incorporating 34 weight percent siloxane units can be blended with an aryl phosphate, giving a composition which can be easily extruded with no surging, screw slippage, or vent flow. Compositions of Examples 1 to 5 were observed to be clear upon visual inspection, and further showed an unexpectedly high melt volume-flow rate (MVR) relative to Comparative Example 1 (CE1). MVR at 300°C for Comparative Example 1 was 8.3 cc/10 minutes. Addition of the aryl phosphate increased the MVR to as much as 179 cc/10 minutes (Example 5). Only a small amount of aryl phosphate was required to double the MVR, as illustrated by Example 2, having 3 weight percent BPADP and a MVR of 17.1 cc/10 minutes. The MVR at 6 and 18 minute equilibration times was only slightly changed for each of the compositions of Examples 1 to 5, indicating that the polyetherimide-siloxane/aryl phosphate compositions had good melt stability at 300°C. Additionally, the polyetherimide-siloxane compositions comprising the aryl phosphate did not show significant weight loss further suggesting the polymer was not degraded. Thermal gravimetric analysis (TGA) revealed the onset of weight loss was above 450°C for all samples, even those having greater than or equal to 10 weight percent BPADP, demonstrating the retention of the aryl phosphate in the polyetherimide-siloxane compositions.

The notched Izod impact strength was also increased from 302 joules per meter (J/m) for Comparative Example 1 to as high as 462 J/m for Example 5. Each composition showed ductile failure in the notched Izod impact tests. The glass transition temperature (Tg) of the polyetherimide-siloxane compositions was reduced with increasing amounts of BPADP, as determined using dynamic mechanical analysis (DMA), however Example 5, incorporating the highest amount of aryl phosphate, still retained a Tg above 120°C. Thus, a large improvement in melt flow properties of polyetherimide-siloxane compositions accompanied by a surprising increase in elongation and impact strength was achieved by incorporating an aryl phosphate in the compositions. Furthermore, the compositions retained good clarity and had sufficient heat capability to resist distortion in boiling water (100°C). Tensile elongation at break is also surprisingly improved from 85 % for Comparative Example 1, to as high as 156%, for Example 5, having 15 weight percent BPADP. The compositions of Examples 1-5 further showed high tensile elongation at yield, with improvements of 40-90% compared to the tensile elongation at yield of Comparative Example 1, not including an aryl phosphate.

Furthermore, the aryl phosphates demonstrated good affinity for the polyetherimide-siloxane copolymer matrix and were not observed to juice, bloom, or migrate from the composition during drying of the resin pellets or oven aging of molded parts.

**Table 2**

| **Components** | **CE1** | **E1** | **E2** | **E3** | **E4** | **E5** |
|---|---|---|---|---|---|---|
| STM1500 | 100 | 98.5 | 97 | 95 | 90 | 85 |
| BPADP | -- | 1.5 | 3 | 5 | 10 | 15 |

| **Properties** | | | | | | |
|---|---|---|---|---|---|---|
| Visual inspection: appearance | clear | clear | clear | clear | clear | clear |
| MVR, 300°C, 6 minutes (cc/10 minutes) | 8.3 | 10.2 | 17.1 | 25.6 | 54.3 | 179 |
| MVR, 300°C, 6 minutes (cc/10 minutes) | 9.3 | 14.2 | 18.9 | 29.1 | 62.7 | 212 |
| MVR improvement (%) | -- | 23 | 106 | 308 | 645 | 2158 |
| M_{w} by GPC (Daltons) | 65,492 | 65,594 | 64,655 | 64,431 | 63,988 | 57,630 |
| Tg DMA (°C) | 167.0 | 152.7 | 147.0 | 140.3 | 130.9 | 122.5 |
| Onset of weight loss by TGA (°C) | 478 | 482 | 479 | 476 | 472 | 463 |
| Tensile Modulus (MPa) | 37.6 | 37.0 | 36.2 | 35.8 | 24.6 | 19.4 |
| Tensile Strength at Yield (MPa) | 15.0 | 20.4 | 19.4 | 17.9 | 16.3 | 14.6 |
| Tensile Elongation at Yield (%) | 41 | 71 | 66 | 58 | 71 | 78 |
| Tensile Strength at Break (MPa) | 21.0 | 23.1 | 23.7 | 22.8 | 22.2 | 19.4 |
| Tensile Elongation at Break (%) | 85 | 102 | 113 | 104 | 143 | 156 |
| Izod impact (Notched) (J/m) | 302 | 371 | 382 | 421 | 459 | 462 |

The compositions of Examples 1 to 5 were further characterized in terms of viscosity vs. shear rate (MVM) at 280°C, and compared to the polyetherimide-siloxane copolymer of Comparative Example 1, as shown in Table 3. The results show that compositions having 1.5 to 15 weight percent aryl phosphate have an improved melt flow (i.e., a lower viscosity than Comparative Example 1) at a wide range of shear rates, from 24 to 7017 seconds⁻¹. These types of shear rates represent those which can be normally encountered in various melt forming processes, such as wire coating and injection molding. The shear viscosities for each composition are reported as Pascal-seconds (Pa-s) in Table 3.

**Table 3**

| | **Shear Viscosity (Pa-s) at 280°C** | | | | | |
|---|---|---|---|---|---|---|
| **Shear Rate (s⁻¹)** | **CE1** | **E1** | **E2** | **E3** | **E4** | **E5** |
| 24 | 3831 | 3429 | 2482 | 2095 | 1248 | 416 |
| 49 | 2547 | 2339 | 1751 | 1521 | 961 | 380 |
| 97 | 1657 | 1539 | 1162 | 1062 | 717 | 330 |
| 195 | 1060 | 997 | 769 | 728 | 509 | 253 |
| 304 | 785 | 746 | 588 | 558 | 405 | 207 |
| 499 | 559 | 540 | 436 | 416 | 308 | 165 |
| 645 | 473 | 455 | 366 | 356 | 269 | 151 |
| 997 | 348 | 338 | 280 | 272 | 208 | 122 |
| 1508 | 263 | 255 | 213 | 210 | 164 | 99 |
| 3004 | 159 | 154 | 132 | 132 | 107 | 68 |
| 5011 | 110 | 106 | 93 | 92 | 75 | 48 |
| 7017 | 88 | 86 | 76 | 75 | 60 | 39 |

Compositions comprising a polyetherimide-siloxane copolymer having a siloxane content of 20 weight percent were prepared including 5.0 to 15.0 weight percent of the aryl phosphate BPADP, as shown in Table 4 as Examples 6 to 8. Examples 6 to 8 further include 0.5 weight percent of TSAN, an anti-drip agent, which rendered these samples opaque. Similar to Examples 1 to 5, Examples 6 to 8 were extruded with no indication of surging, screw slippage, or vent flow. Examples 6 to 8 illustrate improved melt flow properties relative to Comparative Example 2. For example, the polyetherimide-siloxane compositions of Example 6, containing 5 weight percent BPADP, had a MVR of 24 cc/10 minutes, representing a greater than 100% increase compared to the MVR of Comparative Example 2 (10.2 cc/10 minutes). Examples 7 and 8, incorporating 10 and 15 weight percent BPADP, respectively, illustrate that the MVR can be increased to over 50 cc/10 minutes. Molecular weight as determined by GPC was not observed to change significantly, indicating that the polyetherimide-siloxane copolymer was not degraded. Thermal gravimetric analysis (TGA) was used to determine the onset of weight loss for each of the compositions. Even at relatively high loadings of the aryl phosphate (e.g., up to 15 weight percent BPADP), the onset of weight loss was above 400°C, indicating good retention of the aryl phosphate in the polyetherimide-siloxane composition. The glass transition temperature (Tg), as measured by dynamic mechanical analysis (DMA), was reduced, though even with 15 weight percent aryl phosphate, as in Example 8, the Tg was above 145°C. Examples 6 to 8 illustrate a surprising increase in tensile and flexural modulus, relative to Comparative Example 2. Elongation at break is increased from 56% for Comparative Example 2 to as high as 111% for Example 8. Interestingly, the polyetherimide-siloxane blends having aryl phosphate also showed higher notched Izod impact strength at room temperature (23°C) as well as at 0°C. All compositions tested showed ductile failure during the impact testing.

Thus, a very large improvement in the melt flow of the polyetherimide-siloxane copolymer compositions having 20% siloxane content was accompanied by an unexpected increase in elongation, and tensile and flexural modulus when an aryl phosphate was included in the composition. Furthermore, the compositions comprising BPADP also retained sufficient heat capability so as to resist distortion when placed in boiling water.

**Table 4**

| **Components** | **CE2** | **E6** | **E7** | **E8** |
|---|---|---|---|---|
| STM1600 | 99.5 | 94.5 | 89.5 | 84.5 |
| TSAN (SAN:PTFE) | 0.5 | 0.5 | 0.5 | 0.5 |
| BPA-DP | | 5.0 | 10 | 15 |

| **Properties** | | | | |
|---|---|---|---|---|
| MVR, 300° C, 6 minutes (cc/10 minutes) | 10.2 | 24.0 | 53.0 | 108.0 |
| M_{w} by GPC (Daltons) | 48,666 | 48,878 | 48,435 | 47,110 |
| DMA Tg (°C) | 195.5 | 191.8 | 161.3 | 148.2 |
| Onset of weight loss by TGA (°C) | 478 | 469 | 456 | 401 |
| Tensile Modulus (MPa) | 1090 | 1270 | 1330 | 1380 |
| Tensile Strength at Yield (MPa) | 40.5 | 41.5 | 40.6 | 38.3 |
| Tensile Elongations at Break (%) | 56 | 103 | 95 | 111 |
| Flexural Modulus (MPa) | 1260 | 1410 | 1410 | 1350 |
| Flexural Strength at Yield (MPa) | 52.7 | 57.6 | 55.9 | 53.0 |
| Izod impact at 23°C (Notched) (J/m) | 427 | 395 | 453 | 475 |
| Izod impact at 0°C (Notched) (J/m) | 354 | 361 | 397 | 376 |

The compositions of Examples 6 to 8 were further characterized in terms of their viscosity vs. shear rate (MVM) at 280°C, and compared to the polyetherimide-siloxane composition of Comparative Example 2, as shown in Table 5. The results show that compositions having 5.0 to 15 weight percent aryl phosphate have an improved melt flow (i.e., a lower viscosity than Comparative Example 2) at a wide range of shear rates, from 25 to 7016 seconds⁻¹. These types of shear rates represent those which can be normally encountered in various melt forming processes, such as wire coating and injection molding. The shear viscosities for each composition are reported as Pascal-seconds (Pa-s) in Table 5.

**Table 5**

| | **Shear Viscosity (Pa-s) 280°C** | | | |
|---|---|---|---|---|
| **Shear Rate (s⁻¹)** | **CE2** | **E6** | **E7** | **E8** |
| 25 | 5920 | 3022 | 1720 | 882 |
| 50 | 4187 | 2293 | 1339 | 770 |
| 101 | 2833 | 1618 | 1002 | 622 |
| 200 | 1884 | 1125 | 732 | 467 |
| 300 | 1463 | 901 | 597 | 382 |
| 501 | 1062 | 665 | 456 | 303 |
| 641 | 900 | 575 | 399 | 268 |
| 1003 | 668 | 439 | 311 | 216 |
| 1504 | 512 | 344 | 248 | 175 |
| 3007 | 317 | 226 | 166 | 121 |
| 5012 | 213 | 154 | 117 | 87 |
| 7016 | 169 | 125 | 93 | 69 |

The polyetherimide-siloxane compositions, methods of manufacture, and articles made therefrom are further illustrated by the following embodiments, which are non-limiting.
Embodiment 1. A polyetherimide-siloxane composition comprising, 70 to 99.9 weight percent of a polyetherimide-siloxane copolymer having a weight average molecular weight of 5,000 to 80,000 Daltons and having a polysiloxane content of 10 to 50 weight percent, preferably 15 to 40 weight percent, more preferably 20 to 35 weight percent; and 0.1 to 30 weight percent of an aryl phosphate having a molecular weight from 500 to 1,200 Daltons; wherein weight percent is based on the total weight of the composition; and wherein the composition has a melt flow at least 10% greater than the melt flow of the same polyetherimide composition without the aryl phosphate, measured according to ASTM D1238 at 300°C under a 5.0 kilogram load.
Embodiment 2. The polyetherimide-siloxane composition of embodiment 1, wherein a molded sample of the polyetherimide-siloxane composition has a notched Izod impact strength at least 5%, preferably at least 10 percent, more preferably at least 20 % greater than the notched Izod impact strength of a molded sample of the same polyetherimide-siloxane composition without the aryl phosphate, measured according to ASTM D256 at 23°C.
Embodiment 3. The polyetherimide-siloxane composition of embodiments 1 or 2, wherein a molded sample of the polyetherimide-siloxane composition has a tensile elongation at break that is at least 10%, preferably at least 20%, greater than the tensile elongation at break of a molded sample of the same polyetherimide-siloxane composition without the aryl phosphate, measured according to ASTM D638.
Embodiment 4. The polyetherimide-siloxane composition of any of embodiments 1 to 3, wherein a molded sample of the polyetherimide-siloxane composition has a tensile elongation at yield that is at least 10%, preferably at least 40%, more preferably at least 50% greater than the tensile elongation at yield of a molded sample of the same polyetherimide-siloxane composition without the aryl phosphate, measured according to ASTM D638.
Embodiment 5. The polyetherimide-siloxane composition of any of embodiments 1 to 4, wherein the tensile elongation at break is at least 1.5 times the tensile elongation at yield.
Embodiment 6. The polyetherimide-siloxane composition of any of embodiments 1 to 5, wherein the composition has a weight loss of less than or equal to 2% of the initial weight of the composition when heated to 400°C at a rate of 20°C per minute under nitrogen, measured according to ASTM E1131.
Embodiment 7. The polyetherimide-siloxane composition of any of embodiments 1 to 6, wherein the composition has a glass transition temperature of greater than or equal to 120°C.
Embodiment 8. The polyetherimide-siloxane composition of any of embodiments 1 to 7, wherein the composition has a melt volume viscosity rate of greater than or equal to 10.0 cc/10 minutes at 300°C using a 6 minute equilibration time and a 6.7 kilogram load, and a melt viscosity rate using an 18 minute equilibration time of less than 30%, preferably less than 20%, higher than the 6 minute melt viscosity rate measured under the same conditions.
Embodiment 9. The polyetherimide-siloxane composition of any of embodiments 1 to 8, wherein the polyetherimide-siloxane copolymer comprises units of the formula 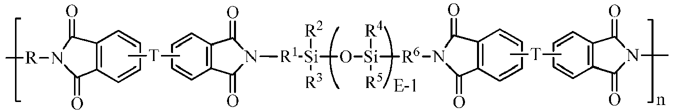 wherein R is a divalent C₂₋₂₀ hydrocarbon group, R¹ and R⁶ is each independently a C₂₋₂₀ divalent hydrocarbyl group, R²-R⁵ is each independently a C₁₋₁₃ monovalent hydrocarbyl group, E is 2 to 50, preferably 5 to 30, more preferably 10 to 40, T is -O- or a group of the formula -O-Z-O-wherein the divalent bonds of the -O- or the -O-Z-O- group are in the 3,3', 3,4', 4,3', or the 4,4' positions, Z is an aromatic C₆₋₂₄ monocyclic or polycyclic group optionally substituted with 1 to 6 C₁₋₈ alkyl groups, 1-8 halogen atoms, or a combination comprising at least one of the foregoing, and n is an integer from 5 to 100.
Embodiment 10. The polyetherimide-siloxane composition of embodiment 9, wherein R is a divalent group of the formula 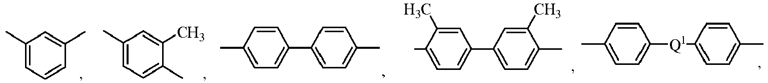 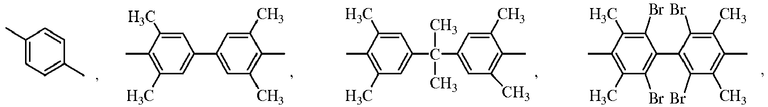 or 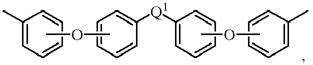 wherein Q¹ is -O-, -S-, -C(O)-, -SO₂-, -SO-, -C_{y}H_{2y}- and a halogenated derivative thereof wherein y is an integer from 1 to 5, or -(C₆H₁₀)_{z}- wherein z is an integer from 1 to 4; and Z is a group derived from a dihydroxy compound of the formula 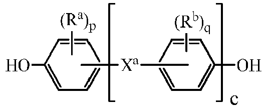 wherein R^{a} and R^{b} are each independently a halogen atom or a monovalent C₁₋₆ alkyl group; p and q are each independently integers of 0 to 4; c is 0 to 4; and X^{a} is a single bond, -O-, -S-,-S(O)-, -SO₂-, -C(O)-, or a C₁₋₁₈ organic bridging group.
Embodiment 11. The polyetherimide-siloxane composition of embodiments 9 or 10, wherein each R is independently meta-phenylene, para-phenylene, or a combination comprising at least one of the foregoing, and Z is 4,4'-diphenylene isopropylidene.
Embodiment 12. The polyetherimide-siloxane composition of any of embodiments 1 to 11, having a total halogen content of 100 ppm or less and a total sodium content of 1000 ppm or less.
Embodiment 13. The polyetherimide-siloxane composition of any of embodiments 1 to 12, wherein the aryl phosphate comprises a bisphenol A diphosphates, resorcinol diphosphate, biphenol diphosphate, hydroquinone diphosphate, acetophenone bisphenol diphosphate, dihydroxy diphenyl ether diphosphate, or a combination comprising at least one of the foregoing.
Embodiment 14. The polyetherimide-siloxane composition of any of embodiments 1 to 13, wherein the aryl phosphate has one oxygen atom linkage for each aryl ring in the phosphate structure.
Embodiment 15. The polyetherimide-siloxane composition of any of embodiments 1 to 14, wherein the aryl phosphate comprises bisphenol A bis(diphenyl phosphate).
Embodiment 16. The polyetherimide-siloxane composition of any of embodiments 1 to 15, wherein the aryl phosphate has a boiling point at atmospheric pressure of greater than or equal to 300°C.
Embodiment 17. The polyetherimide-siloxane composition of any of embodiments 1 to 15 comprising 85 to 99.9 weight percent of the polyetherimide-siloxane copolymer; and to 15 weight percent of the aryl phosphate.
Embodiment 18. The polyetherimide-siloxane composition of any of embodiments 1 to 15, further comprising 0.1 to 3.0 weight percent of an anti-drip agent comprising styrene-acrylonitrile encapsulated polytetrafluoroethylene.
Embodiment 19. The polyetherimide-siloxane composition of any of embodiments 1 to 18 wherein the polyetherimide-siloxane copolymer comprises carboxylic anhydride groups and aryl amine groups, and wherein the carboxylic anhydride end groups are in excess of the aryl amine end groups.
Embodiment 20. A method of preparing the polyetherimide-siloxane composition of any of embodiments 1 to 19, the method comprising, melt-combining the components of the composition; and extruding the components.
Embodiment 21. An article comprising the polyetherimide-siloxane composition of any of embodiments 1 to 19.
Embodiment 22. The article of embodiment 21, wherein the article is a coated wire, an electrical connector, a circuit board, an over-molded electric circuit, a circuit board component, or a component of a hand-held electronic device or a component of a motor or generator.
Embodiment 23. The article of embodiment 21 or 22, wherein the article has a maximum thickness of 3 centimeters.
Embodiment 24. The article of any of embodiments 21 to 23, wherein the article has 100 ppm or less of elements selected from the group consisting of mercury, lead, cadmium, arsenic, and thallium.

In general, the compositions, methods, and articles may alternatively comprise, consist of, or consist essentially of, any appropriate components or steps herein disclosed. The compositions, methods, and articles may additionally, or alternatively, be formulated so as to be devoid, or substantially free, of any components, materials, ingredients, adjuvants or species used in the prior art compositions or that are otherwise not necessary to the achievement of the function and/or objectives of the present claims. All cited patents, patent applications, and other references are incorporated herein by reference in their entirety. However, if a term in the present application contradicts or conflicts with a term in the incorporated reference, the term from the present application takes precedence over the conflicting term from the incorporated reference.

All ranges disclosed herein are inclusive of the endpoints, and the endpoints are independently combinable with each other. "Or" means "and/or". "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. Reference throughout the specification to "another embodiment", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments.

As used herein, the term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated, divalent hydrocarbon group (e.g., methylene (-CH₂-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂) or propenylene (-HC(CH₃)=CH₂-). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy, ethoxy, and sec-butyloxy. "Cycloalkyl" and "cycloalkylene" mean a monovalent and divalent cyclic hydrocarbon group, respectively, of the formula -CₙH₂ₙ₋ₓ and -CₙH₂ₙ₋₂ₓ- wherein x is the number of cyclization. "Aryl" means a monovalent, monocyclic, or polycyclic aromatic group (e.g., phenyl or naphthyl). "Arylene" means a divalent, monocyclic, or polycyclic aromatic group (e.g., phenylene or naphthylene). The prefix "halo" means a group or compound including one more halogen (F, Cl, Br, or I) substituents, which can be the same or different. The prefix "hetero" means a group or compound that includes at least one ring member that is a heteroatom (e.g., 1, 2, or 3 heteroatoms, wherein each heteroatom is independently N, O, S, or P.

"Substituted" means that the compound or group is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g, benzyl), C₇₋₁₂ alkylarylene (e.g, toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the group, including those of the substituents.

## Claims

1. A polyetherimide-siloxane composition comprising,
70 to 99.9 weight percent of a polyetherimide-siloxane copolymer having a weight average molecular weight of 5,000 to 80,000 Daltons and having a polysiloxane content of 10 to 50 weight percent; and
0.1 to 30 weight percent of an aryl phosphate having a molecular weight from 500 to 1,200 Daltons;
wherein weight percent is based on the total weight of the composition; and
wherein thermoplastic polymers other than the polyetherimide-siloxane copolymer are excluded from the polyetherimide-siloxane composition.

2. The polyetherimide-siloxane composition of claim 1, wherein the tensile elongation at break is at least 1.5 times the tensile elongation at yield.

3. The polyetherimide-siloxane composition of any one or more of claims 1 to 2, wherein the composition has a weight loss of less than or equal to 2% of the initial weight of the composition when heated to 400°C at a rate of 20°C per minute under nitrogen, measured according to ASTM E1131.

4. The polyetherimide-siloxane composition of any one or more of claims 1 to 3, wherein the composition has a glass transition temperature of greater than or equal to 120°C.

5. The polyetherimide-siloxane composition of any one or more of claims 1 to 4, wherein the composition has a melt volume viscosity rate of greater than or equal to 10.0 cc/10 minutes at 300°C using a 6 minute equilibration time and a 6.7 kilogram load, and a melt viscosity rate using an 18 minute equilibration time of less than 30% higher than the 6 minute melt viscosity rate measured under the same conditions.

6. The polyetherimide-siloxane composition of any one or more of claims 1 to 5, wherein the aryl phosphate comprises a bisphenol A diphosphates, resorcinol diphosphate, biphenol diphosphate, hydroquinone diphosphate, acetophenone bisphenol diphosphate, dihydroxy diphenyl ether diphosphate, or a combination comprising at least one of the foregoing, preferably bisphenol A bis(diphenyl phosphate).

7. The polyetherimide-siloxane composition of any one or more of claims 1 to 6, wherein the aryl phosphate has one oxygen atom linkage for each aryl ring in the phosphate structure.

8. The polyetherimide-siloxane composition of any one or more of claims 1 to 7, wherein the aryl phosphate has a boiling point at atmospheric pressure of greater than or equal to 300°C.

9. The polyetherimide-siloxane composition of any one or more of claims 1 to 8 comprising
85 to 99.9 weight percent of the polyetherimide-siloxane copolymer; and
0.1 to 15 weight percent of the aryl phosphate.

10. The polyetherimide-siloxane composition of any one or more of claims 1 to 8, further comprising 0.1 to 3.0 weight percent of an anti-drip agent comprising styrene-acrylonitrile encapsulated polytetrafluoroethylene.

11. The polyetherimide-siloxane composition of any one or more of claims 1 to 10 wherein the polyetherimide-siloxane copolymer comprises carboxylic anhydride groups and aryl amine groups, and wherein the carboxylic anhydride end groups are in excess of the aryl amine end groups.

12. A method of preparing the polyetherimide-siloxane composition of any one or more of claims 1 to 11, the method comprising,
melt-combining the components of the composition; and
extruding the components.

13. An article comprising the polyetherimide-siloxane composition of any one or more of claims 1 to 11.

14. The article of claim 13, wherein the article is a coated wire, an electrical connector, a circuit board, an over-molded electric circuit, a circuit board component, or a component of a hand-held electronic device or a component of a motor or generator.

## Patentansprüche

1. Polyetherimid-Siloxan-Zusammensetzung, umfassend:
70 bis 99,9 Gewichtsprozent eines Polyetherimid-Siloxan-Copolymers mit einem gewichtsmittleren Molekulargewicht von 5 000 bis 80 000 Dalton und einem Polysiloxangehalt von 10 bis 50 Gewichtsprozent und
0,1 bis 30 Gewichtsprozent eines Arylphosphats mit einem Molekulargewicht von 500 bis 1 200 Dalton;
wobei Gewichtsprozent auf dem Gesamtgewicht der Zusammensetzung basiert und
wobei thermoplastische Polymere, bei denen es sich nicht um das Polyetherimid-Siloxan-Copolymer handelt, aus der Polyetherimid-Siloxan-Zusammensetzung ausgeschlossen sind.

2. Polyetherimid-Siloxan-Zusammensetzung nach Anspruch 1, wobei die Bruchdehnung mindestens das 1,5-fache der Streckdehnung ausmacht.

3. Polyetherimid-Siloxan-Zusammensetzung nach einem oder mehreren der Ansprüche 1 bis 2, wobei die Zusammensetzung eine Gewichtsabnahme kleiner gleich 2 % des Anfangsgewichts der Zusammensetzung aufweist, wenn sie auf 400 °C mit einer Rate von 20 °C pro Minute unter Stickstoff erhitzt wird, gemäß ASTM E1131 gemessen.

4. Polyetherimid-Siloxan-Zusammensetzung nach einem oder mehreren der Ansprüche 1 bis 3, wobei die Zusammensetzung eine Glasübergangstemperatur größer gleich 120 °C aufweist.

5. Polyetherimid-Siloxan-Zusammensetzung nach einem oder mehreren der Ansprüche 1 bis 4, wobei die Zusammensetzung eine Schmelzvolumen-Viskositätsrate größer gleich 10,0 cm³/10 Minuten bei 300 °C unter Verwendung einer Äquilibrierungszeit von 6 Minuten und einer Last von 6,7 Kilogramm und eine Schmelze-Viskositätsrate unter Verwendung einer Äquilibrierungszeit von 18 Minuten, die weniger als 30 % höher als die 6-Minuten-Schmelze-Viskositätsrate ist, gemessen unter denselben Bedingungen, aufweist.

6. Polyetherimid-Siloxan-Zusammensetzung nach einem oder mehreren der Ansprüche 1 bis 5, wobei das Arylphosphat ein Bisphenol-A-diphosphat, Resorcindiphosphat, Biphenoldiphosphat, Hydrochinondiphosphat, Acetophenonbisphenoldiphosphat, Dihydroxydiphenyletherdiphosphat oder eine Kombination, die mindestens eines der vorstehenden umfasst, vorzugsweise Bisphenol-A-bis(diphenylphosphat) umfasst.

7. Polyetherimid-Siloxan-Zusammensetzung nach einem oder mehreren der Ansprüche 1 bis 6, wobei das Arylphosphat eine Sauerstoffatomverknüpfung für jeden Arylring in der Phosphatstruktur aufweist.

8. Polyetherimid-Siloxan-Zusammensetzung nach einem oder mehreren der Ansprüche 1 bis 7, wobei das Arylphosphat einen Siedepunkt bei Atmosphärendruck größer gleich 300 °C aufweist.

9. Polyetherimid-Siloxan-Zusammensetzung nach einem oder mehreren der Ansprüche 1 bis 8, umfassend:
85 bis 99,9 Gewichtsprozent des Polyetherimid-Siloxan-Copolymers und
0,1 bis 15 Gewichtsprozent des Arylphosphats.

10. Polyetherimid-Siloxan-Zusammensetzung nach einem oder mehreren der Ansprüche 1 bis 8, die weiterhin 0,1 bis 3,0 Gewichtsprozent eines Antitropfmittels umfasst, das mit Styrol-Acetonitril eingekapseltes Polytetrafluorethylen umfasst.

11. Polyetherimid-Siloxan-Zusammensetzung nach einem oder mehreren der Ansprüche 1 bis 10, wobei das Polyetherimid-Siloxan-Copolymer Carbonsäureanhydridgruppen und Arylamingruppen umfasst und wobei die Carbonsäureanhydrid-Endgruppen im Überschuss zu den Arylamin-Endgruppen sind.

12. Verfahren zur Herstellung der Polyetherimid-Siloxan-Zusammensetzung nach einem oder mehreren der Ansprüche 1 bis 11, wobei das Verfahren Folgendes umfasst:
Schmelzkombinieren der Komponenten der Zusammensetzung und Extrudieren der Komponenten.

13. Artikel, der die Polyetherimid-Siloxan-Zusammensetzung nach einem oder mehreren der Ansprüche 1 bis 11 umfasst.

14. Artikel nach Anspruch 13, wobei der Artikel ein beschichteter Draht, ein elektrischer Verbinder, eine Platine, eine umspritzte elektrische Schaltung, eine Platinenkomponente oder eine Komponente eines tragbaren elektronischen Geräts oder eine Komponente eines Motors oder Generators ist.

## Revendications

1. Composition de polyétherimide-siloxane comprenant,
70 à 99,9 pour cent en poids d'un copolymère de polyétherimide-siloxane ayant un poids moléculaire moyen en poids de 5 000 à 80 000 daltons et ayant une teneur en polysiloxane de 10 à 50 pour cent en poids ; et
0,1 à 30 pour cent en poids d'un phosphate d'aryle ayant un poids moléculaire de 500 à 1 200 daltons ;
dans laquelle le pourcentage en poids est basé sur le poids total de la composition ; et
dans laquelle les polymères thermoplastiques autres que le copolymère de polyétherimide-siloxane sont exclus de la composition de polyétherimide-siloxane.

2. Composition de polyétherimide-siloxane selon la revendication 1, dans laquelle l'allongement en traction à la rupture est au moins 1,5 fois l'allongement en traction à la limite élastique.

3. Composition de polyétherimide-siloxane selon l'une quelconque ou plusieurs des revendications 1 à 2, dans laquelle la composition a une perte de poids inférieure ou égale à 2 % du poids initial de la composition lorsqu'elle est chauffée à 400 °C à une vitesse de 20 °C par minute sous azote, mesurée selon la norme ASTM E1131.

4. Composition de polyétherimide-siloxane selon l'une quelconque ou plusieurs des revendications 1 à 3, dans laquelle la composition a une température de transition vitreuse supérieure ou égale à 120 °C.

5. Composition de polyétherimide-siloxane selon l'une quelconque ou plusieurs des revendications 1 à 4, dans laquelle la composition a un indice de viscosité en volume à l'état fondu supérieur ou égal à 10,0 cm³/10 minutes à 300 °C en utilisant un temps d'équilibrage de 6 minutes et une charge de 6,7 kilogrammes, et un indice de viscosité à l'état fondu en utilisant un temps d'équilibrage de 18 minutes de moins de 30 % supérieur à l'indice de viscosité à l'état fondu à 6 minutes mesuré dans les mêmes conditions.

6. Composition de polyétherimide-siloxane selon l'une quelconque ou plusieurs des revendications 1 à 5, dans laquelle le phosphate d'aryle comprend un diphosphate de bisphénol A, un diphosphate de résorcinol, un diphosphate de biphénol, un diphosphate d'hydroquinone, un diphosphate d'acétophénone et de bisphénol, un diphosphate de dihydroxy diphényl éther, ou une combinaison comprenant au moins un des éléments ci-dessus, de préférence le bis(diphényl phosphate) de bisphénol A.

7. Composition de polyétherimide-siloxane selon l'une quelconque ou plusieurs des revendications 1 à 6, dans laquelle le phosphate d'aryle a une liaison d'atome d'oxygène pour chaque cycle aryle dans la structure phosphate.

8. Composition de polyétherimide-siloxane selon l'une quelconque ou plusieurs des revendications 1 à 7, dans laquelle le phosphate d'aryle a un point d'ébullition à la pression atmosphérique supérieur ou égal à 300 °C.

9. Composition de polyétherimide-siloxane selon l'une quelconque ou plusieurs des revendications 1 à 8, comprenant
85 à 99,9 pour cent en poids du copolymère de polyétherimide-siloxane ; et
0,1 à 15 pour cent en poids du phosphate d'aryle.

10. Composition de polyétherimide-siloxane selon l'une quelconque ou plusieurs des revendications 1 à 8, comprenant en outre 0,1 à 3,0 pour cent en poids d'un agent anti-goutte comprenant du polytétrafluoroéthylène encapsulé dans du styrène-acrylonitrile.

11. Composition de polyétherimide-siloxane selon l'une quelconque ou plusieurs des revendications 1 à 10, dans laquelle le copolymère de polyétherimide-siloxane comprend des groupes anhydride carboxylique et des groupes arylamine, et dans laquelle les groupes terminaux anhydride carboxylique sont en excès par rapport aux groupes terminaux arylamine.

12. Procédé de préparation de la composition de polyétherimide-siloxane selon l'une quelconque ou plusieurs des revendications 1 à 11, le procédé comprenant
la combinaison à l'état fondu des constituants de la composition ; et
l'extrusion des constituants.

13. Article comprenant la composition de polyétherimide-siloxane selon l'une quelconque ou plusieurs des revendications 1 à 11.

14. Article selon la revendication 13, dans lequel l'article est un fil revêtu, un connecteur électrique, une carte de circuit imprimé, un circuit électrique surmoulé, un composant de carte de circuit imprimé, ou un composant d'un dispositif électronique portatif ou un composant d'un moteur ou d'un générateur.
